# EUROPEAN PATENT APPLICATION

(11) **EP 4 697 264 A1**
(43) Date of publication of application: **18.02.2026**
(21) Application number: 25195349.3
(22) Date of filing: 12.08.2025
(51) Int. Cl.: G06T 7/292

(54) **OBJECT TRACKING**

(30) Priority: 13.08.2024 JP 2024134959
(71) Applicant: Canon Kabushiki Kaisha, Ohta-ku Tokyo 146-8501 (JP)
(72) Inventor: SHEN, Yangtai, Tokyo 146-8501 (JP)
(74) Representative: TBK

(57) **Abstract**

An information processing apparatus(100) according to the present disclosure obtains a plurality of captured images obtained by capturing images of an object from different directions(S301), estimates a three-dimensional shape of the object using the plurality of captured images(S302), performs tracking processing of the object to track the object by estimating an identifier and a position of the object using the three-dimensional shape(S303), performs identification processing of the object to identify the object using at least some of the plurality of captured images(S311) and estimate an identifier and a position of the object, detects an error in the result of the tracking processing based on the result of the tracking processing and the result of the identification processing, and complements tracking data indicating the result of the tracking processing using the result of the identification processing in a case where an error in the tracking processing is detected(S315).

## Description

### TECHNICAL FIELD

The present disclosure relates to an object tracking technology.

### BACKGROUND

For an object present in a target region, there is a technology for tracking the position of the object (hereinafter referred to as an "object position") that changes with time. Japanese Patent Laid-Open No. 2024-055093 discloses a technology, in the field of generating a virtual viewpoint image, for tracking an object position by clipping a part of an estimated three-dimensional shape of an object, obtaining the position of the clipped three-dimensional shape, and setting an identifier.

### SUMMARY

In tracking the object position, past tracking results and input information on the current state are generally used to estimate the current tracking result. However, in a case where an image capturing target is a sport such as a ball sport, for example, there are situations where players crowd together or enter and exit a field. The inventor noticed that in such situations, a player may be occluded by another player or a structure such as a goal placed on the field, which may cause an error or mistake in the tracking result. The inventor also noticed that the accumulation of errors or mistakes in the tracking result may cause erroneous tracking of the player's position.

The present disclosure in its first aspect provides an information processing apparatus as specified in claim 1. Optional features are specified in claims 2 to 12.

The present disclosure in its second aspect provides an information processing method as specified in claim 13.

The present disclosure in its third aspect provides a program as specified in claim 14.

According to the present disclosure, the object position may be accurately tracked.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram showing an example of a configuration of an information processing system according to Embodiment 1.
Figs. 2A and 2B are block diagrams showing an example of a configuration of an information processing apparatus according to Embodiment 1.
Fig. 3 is a flowchart showing an example of a processing flow of the information processing apparatus according to Embodiment 1.
Fig. 4 is a diagram for explaining a processing cycle of each unit included in a functional configuration of the information processing apparatus according to Embodiment 1.
Fig. 5 is a flowchart showing an example of a flow of identification processing by an identification unit according to Embodiment 1.
Fig. 6 is a diagram showing an example of an image capturing scene in the information processing system according to Embodiment 1.
Figs. 7A to 7L are diagrams for explaining an example of the identification processing by the identification unit according to Embodiment 1.
Fig. 8 is a flowchart showing an example of a flow of judgement processing by a detection unit according to Embodiment 1.
Fig. 9 is a block diagram showing an example of a functional configuration of an image processing apparatus according to Embodiment 1.

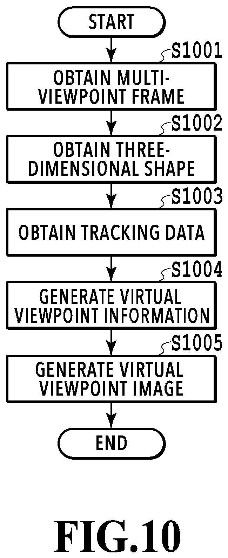

Fig. 10 is a flowchart showing an example of a processing flow of the image processing apparatus according to Embodiment 1.
Fig. 11 is a flowchart showing an example of a flow of identification processing by an identification unit according to Embodiment 2.
Figs. 12A to 12C are diagrams for explaining an example of a method for estimating an object position by the identification unit according to Embodiment 2.
Fig. 13 is a flowchart showing an example of a flow of judgement processing by a detection unit according to Embodiment 2.

### DESCRIPTION OF THE EMBODIMENTS

Hereinafter, with reference to the attached drawings, the present disclosure is explained in detail in accordance with preferred embodiments. Configurations shown in the following embodiments are merely exemplary and the present disclosure is not limited to the configurations shown schematically. Incidentally, an identical reference numeral is assigned to an identical constituent and an explanation thereof is made.

### [Embodiment 1]

### <Configuration of Information Processing System>

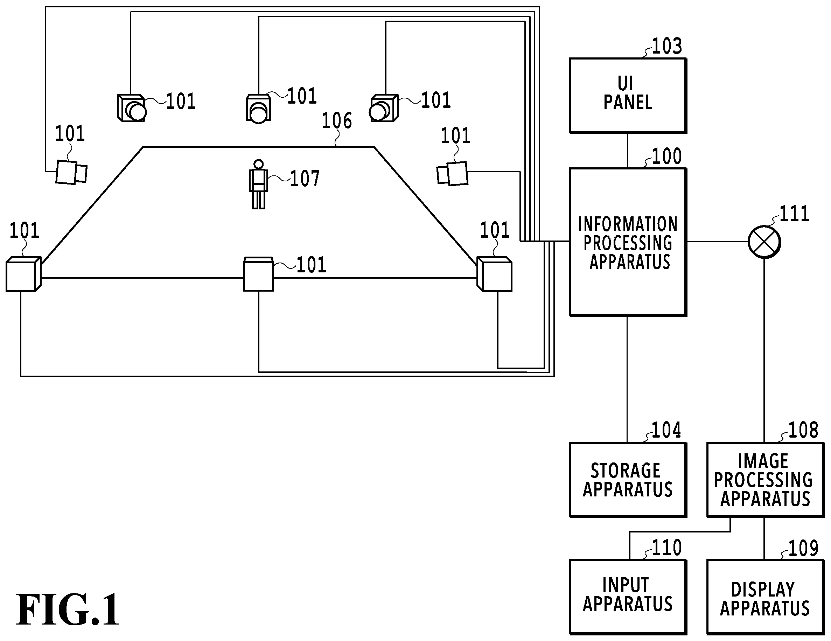

Fig. 1 is a diagram showing an example of a configuration of an information processing system according to Embodiment 1. The information processing system includes an information processing apparatus 100, a plurality of image capturing apparatuses 101, a user interface (UI) panel 103, a storage apparatus 104, an image processing apparatus 108, a display apparatus 109, and an input apparatus 110.

The image capturing apparatuses 101 are each composed of a digital still camera or a digital video camera, and disposed at different positions. The image capturing apparatuses 101 each capture an image of an object 107 present in an image capturing space 106 from different directions in a synchronized manner according to predetermined image capturing conditions, thereby obtaining a plurality of captured images corresponding to each direction. Such synchronized image capturing also includes a case where images are captured at approximately the same time. The captured images obtained through the image capturing by the image capturing apparatus 101 may be still image data or moving images, or may be both still images and moving images. The following description is given of an example where the captured image is a moving image, and each image capturing apparatus 101 outputs frame data obtained by the synchronized image capturing in a time-series manner based on a given frame interval. The object 107 may be, for example, a natural person such as a player or a referee participating in a game, or an object such as a ball used in a game.

The information processing apparatus 100 is composed of a personal computer, a server apparatus, or the like. The information processing apparatus 100 obtains data of a plurality of frames (hereinafter referred to as "multi-viewpoint frames") transmitted from the plurality of image capturing apparatuses 101, and use the multi-viewpoint frames thus obtained to track the position of the object 107 present in the image capturing space 106. The data about the position of the object 107 obtained by the tracking (hereinafter referred to as "tracking data") is outputted to the image processing apparatus 108 via a network 111 such as a local area network (LAN). In addition to the tracking data, the information processing apparatus 100 also outputs to the image processing apparatus 108 data of the multi-viewpoint frames used in generating the tracking data, data indicating the three-dimensional shape of the object generated as an intermediate product in generating the tracking data, and the like. The information processing apparatus 100 also outputs data such as the tracking data to the storage apparatus 104, and causes the storage apparatus 104 to output and store the data.

In the present embodiment, as shown in Fig. 1, description is given of an example where each of the plurality of image capturing apparatuses 101 and the information processing apparatus 100 are connected to each other. However, the method of connection between the image capturing apparatuses 101 and the information processing apparatus 100 is not limited thereto. Specifically, for example, the plurality of image capturing apparatuses 101 may be cascade-connected by connecting adjacent image capturing apparatuses 101 to each other, and at least one of the plurality of image capturing apparatuses 101 may be connected to the information processing apparatus 100.

The UI panel 103 includes a display device such as a liquid crystal panel, and displays a graphical user interface (GUI) on the display device to present to a user information such as the image capturing conditions for the image capturing apparatus 101 and processing settings for the information processing apparatus 100. The UI panel 103 may also include an input device such as a touch panel or a button, in which case the UI panel 103 receives instructions from the user regarding a change to the image capturing conditions or processing settings. In this case, information indicating the instruction from the user received by the UI panel 103 is transmitted to the information processing apparatus 100. The input device may be provided separately from the UI panel 103, such as a mouse or a keyboard. The storage apparatus 104 is composed of a hard disk drive or the like, and is configured to obtain and store data such as the tracking data outputted from the information processing apparatus 100.

The image processing apparatus 108 is composed of a personal computer, a server apparatus, or the like. The image processing apparatus 108 generates an image (hereinafter referred to as a "virtual viewpoint image") corresponding to a view from an arbitrary virtual viewpoint based on the tracking data outputted from the information processing apparatus 100. The virtual viewpoint image generated by the image processing apparatus 108 is outputted to and displayed on the display apparatus 109. The display apparatus 109 is composed of a liquid crystal display or the like, and displays the virtual viewpoint image outputted from the image processing apparatus 108. The input apparatus 110 is composed of a mouse, a keyboard or the like, and receives an input operation on the image processing apparatus 108 by the user and transmits an input signal corresponding to the input operation to the image processing apparatus 108.

The image capturing space 106 is a three-dimensional space surrounded by the plurality of image capturing apparatuses 101 installed for a game or the like. In Fig. 1, a frame indicated by a solid line indicates the outline of the image capturing space 106 on a floor surface. Fig. 1 shows an example where eight image capturing apparatuses 101 are installed so as to surround the image capturing space 106. However, the number of the image capturing apparatuses 101 installed may be equal to or less than seven, or equal to or more than nine as long as two or more thereof are installed. The plurality of image capturing apparatuses 101 do not have to be installed so as to completely surround the entire periphery of the image capturing space 106, and the image capturing apparatuses 101 do not have to be installed in a part of the entire periphery.

The following description is given assuming that camera parameters of each image capturing apparatus 101 are known. However, the information processing apparatus 100 or the image processing apparatus 108 may obtain the camera parameters of each image capturing apparatus 101 by estimating the position and orientation of each image capturing apparatus 101 based on the captured image. The camera parameters include intrinsic parameters, extrinsic parameters, distortion parameters, and the like. The intrinsic parameters are parameters representing the central coordinates of the captured image obtained through image capturing by the image capturing apparatus and the focal length of a lens. The extrinsic parameters are parameters representing the position and orientation of the image capturing apparatus. The distortion parameters are parameters representing the distortion of the lens. The camera parameters of the plurality of image capturing apparatuses 101, particularly the intrinsic parameters and the distortion parameters, may be common to each other. The distortion parameters and the like other than the intrinsic parameters and the extrinsic parameters are data included in the camera parameters as necessary, and do not necessarily have to be included in the camera parameters.

### <Configuration of Information Processing Apparatus>

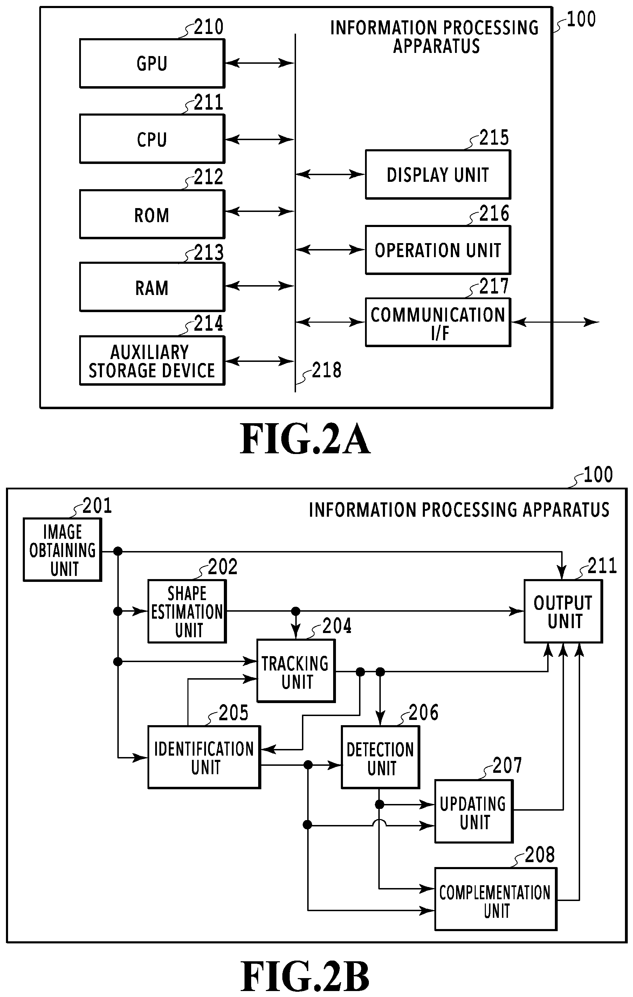

With reference to Figs. 2A and 2B, a configuration of the information processing apparatus 100 will be described. Figs. 2A and B are block diagrams showing an example of the configuration of the information processing apparatus 100 according to Embodiment 1. Specifically, Fig. 2A is a block diagram showing an example of a hardware configuration of the information processing apparatus 100. Fig. 2B is a block diagram showing an example of a functional configuration of the information processing apparatus 100. First, the hardware configuration of the information processing apparatus 100 will be described with reference to Fig. 2A. The information processing apparatus 100 includes a graphics processing unit (GPU) 210, a central processing unit (CPU) 211, a read-only memory (ROM) 212, a random access memory (RAM) 213, an auxiliary storage device 214, a display unit 215, an operation unit 216, a communication I/F 217, and a bus 218.

The CPU 211 uses computer programs and various data stored in the ROM 212 or RAM 213 to control the entire information processing apparatus 100, thereby realizing various functions of the information processing apparatus 100. The CPU 211 also operates as a display control unit to control the display unit 215, and as an operation control unit to control the operation unit 216. The GPU 210 uses computer programs and various data stored in the ROM 212 or RAM 213 to perform some of the processing in place of the CPU 211. The GPU 210 may perform efficient computation by parallel processing of more data than the CPU 211.

The execution of computer programs may be performed by only one of the CPU 211 or the GPU 210, or may be performed by the CPU 211 and the GPU 210 working in cooperation. The information processing apparatus 100 may have one or more pieces of dedicated processing hardware different from the CPU 211 and the GPU 210, and the dedicated processing hardware may execute at least a part of the processing by the CPU 211 or the GPU 210. Examples of the dedicated hardware include an ASIC (application specific integrated circuit), an FPGA (field programmable gate array), and a DSP (digital signal processor).

The ROM 212 stores computer programs and the like that require no changes. The RAM 213 temporarily stores computer programs and data supplied from the auxiliary storage device 214, as well as data and the like supplied from outside via the communication I/F 217. The auxiliary storage device 214 is composed of a hard disk drive or the like, and stores various data such as image data. The display unit 215 is composed of a liquid crystal display, an LED or the like, and displays a GUI or the like for the user to operate the information processing apparatus 100. The operation unit 216 is composed of a keyboard, a mouse, a joystick, a touch panel or the like, and receives an operation by the user and inputs various instructions to the CPU 211 and the GPU 210.

The communication I/F 217 is used for communication between the information processing apparatus 100 and an external device. For example, in a case where the information processing apparatus 100 is connected to the external device through a wired connection, a communication cable is connected to the communication I/F 217. In a case where the information processing apparatus 100 has a function of wireless communication with the external device, the communication I/F 217 is equipped with an antenna. The bus 218 transmits various information through communicable connection between the components in the above-mentioned hardware configuration of the information processing apparatus 100.

Next, the functional configuration of the information processing apparatus 100 will be described with reference to Fig. 2B. The information processing apparatus 100 includes an image obtaining unit 201, a shape estimation unit 202, a tracking unit 204, an identification unit 205, a detection unit 206, an updating unit 207, a complementation unit 208, and an output unit 209. The following description is given of an example where the information processing apparatus 100 is composed of one electronic apparatus such as a personal computer, but the information processing apparatus 100 may be composed of a plurality of electronic apparatuses configured to cooperate with each other.

The image obtaining unit 201 obtains data of frames (multi-viewpoint frames) outputted from each image capturing apparatus 101. The source of data of each frame for the image obtaining unit 201 is not limited to the image capturing apparatus 101. For example, the image obtaining unit 201 may obtain the data by reading frame data prestored in the storage apparatus 104 or the like. For example, information capable of specifying the image capturing apparatus 101 that captured a frame and information capable of specifying frames captured at synchronized timing are added as additional information to the data of each frame. The multi-viewpoint frame data obtained by the image obtaining unit 201 is transmitted to the shape estimation unit 202 and the identification unit 205. The multi-viewpoint frame data obtained by the image obtaining unit 201 is also stored in the auxiliary storage device 214. The storage destination of the multi-viewpoint frame data is not limited to the auxiliary storage device 214, and the multi-viewpoint frame data may also be stored in the storage apparatus 104. In this case, the image obtaining unit 201 transmits the multi-viewpoint frame data to the output unit 209, and the output unit 209 stores the multi-viewpoint frame data in the storage apparatus 104 via the communication I/F 217.

The shape estimation unit 202 uses the multi-viewpoint frame obtained by the image obtaining unit 201 to extract an object silhouette as a foreground from each frame, for example, and estimate the three-dimensional shape of the object 107 present in the image capturing space 106 using a visual hull or the like. The data about the three-dimensional shape of the object obtained as a result of estimation processing by the shape estimation unit 202 (hereinafter referred to as "three-dimensional shape data") is transmitted to the tracking unit 204. The three-dimensional shape data obtained as a result of the estimation processing by the shape estimation unit 202 is stored in the auxiliary storage device 214. The storage destination of the three-dimensional shape data is not limited to the auxiliary storage device 214, and the three-dimensional shape data may be stored in the storage apparatus 104. In this case, the shape estimation unit 202 transmits the three-dimensional shape data to the output unit 209, and the output unit 209 stores the three-dimensional shape data in the storage apparatus 104 via the communication I/F 217.

The object 107 whose three-dimensional shape is to be estimated includes a natural person and an article handled by the natural person, and the like. The camera parameters for each image capturing apparatus 101 used in a case of estimating the three-dimensional shape of the object 107 using a multi-viewpoint frame by the visual hull or the like are prestored in the auxiliary storage device 214 or the like. That is, the shape estimation unit 202 obtains camera parameters from the auxiliary storage device 214 or the like, and estimates the three-dimensional shape of the object 107 using the obtained camera parameters and the multi-viewpoint frame data obtained by the image obtaining unit 201.

The tracking unit 204 performs tracking processing of the object position based on at least one of the following: at least some of the frames obtained by the image obtaining unit 201, and the three-dimensional shape of the object obtained as a result of the estimation processing by the shape estimation unit 202. The tracking data indicating the result of the tracking processing by the tracking unit 204 is stored in the auxiliary storage device 214. The storage destination of the tracking data is not limited to the auxiliary storage device 214, and the tracking data may be stored in the storage apparatus 104. In this case, the tracking unit 204 transmits the tracking data to the output unit 209, and the output unit 209 stores the tracking data in the storage apparatus 104 via the communication I/F 217. The tracking processing by the tracking unit 204 and the tracking data will be described in detail later.

The identification unit 205 identifies an object corresponding to the three-dimensional shape, based on the tracking data indicating the result of the tracking processing by the tracking unit 204 and the multi-viewpoint frame obtained by the image obtaining unit 201. The result of the identification processing by the identification unit 205 is transmitted to the detection unit 206, the updating unit 207, and the complementation unit 208. The identification processing by the identification unit 205 will be described in detail later.

The information processing apparatus 100 uses the tracking unit 204 and the identification unit 205 to realize accurate tracking of the object position while reducing the computation amount. In the method of tracking an object by the tracking unit 204, an identifier is assigned to the three-dimensional shape, and the object position is tracked by tracking the identifier. In this tracking method, the same identifier is assigned to the three-dimensional shapes of objects estimated to be the same based on a temporal positional relationship between the three-dimensional shapes at different points in time. Here, the identifier is information that may distinguish one object from another and uniquely specify the object. According to this tracking method, it is sufficient that judgement be made as to whether the three-dimensional shapes correspond to the same object, based on the positional relationship between the three-dimensional shapes of the objects. Therefore, the object position may be tracked with a relatively small computation amount.

For example, in a case where a plurality of objects crowd together, a case where two or more objects are close to each other, or a case where an object is temporarily occluded by a structure or the like, an erroneous identifier corresponding to a different object is sometimes assigned. In a case where an erroneous identifier is assigned, tracking of the object position is performed with the erroneous identifier still assigned. Hereinafter, such a state where an erroneous identifier is assigned will be described as a "tracking failure state" or "tracking failure".

In a method of identifying an object by the identification unit 205, a feature amount of an object contained as representation in a captured image such as a frame is extracted from the captured image, and the object is identified and specified based on the extracted feature amount. This identification method may accurately specify an object using captured images obtained by image capturing from different directions, even in the case where a plurality of objects crowd together, where two or more objects are close to each other, and where the object is occluded by a structure or the like. However, this identification method requires a relatively large computation amount. In a case of processing each frame, an enormous amount of computation is required, and the processing is sometimes not completed by the time the next captured frame is obtained.

Therefore, in the present embodiment, the identification unit 205 performs object identification processing over a period of several frames depending on the processing time, and the tracking unit 204 performs tracking processing for each frame. Furthermore, for accurate tracking of the object position, the information processing apparatus 100 compares the result of the tracking processing by the tracking unit 204 with the result of the identification processing by the identification unit 205 at a given cycle and judges whether or not tracking by the tracking unit 204 has failed. In a case where a tracking failure is detected, the information processing apparatus 100 first resets the tracking state in the tracking unit 204 so that the tracking of the object position by the tracking unit 204 after the detection of the tracking failure is not continued in the tracking failure state. The information processing apparatus 100 then corrects and complements the tracking state so that the object position is tracked using the result of the identification processing by the identification unit 205 for the period involving the tracking failure.

The detection unit 206 detects the tracking failure state based on the result of the identification processing by the identification unit 205 and the result of the tracking processing by the tracking unit 204. Specifically, the detection unit 206 judges whether or not the tracking has failed, based on the result of the identification processing and the result of the tracking processing. The detection processing by the detection unit 206 will be described in detail later. In a case where the detection unit 206 judges that the tracking has not failed, the updating unit 207 uses the result of the identification processing by the identification unit 205 to update the result of the tracking processing by the tracking unit 204. The update processing by the updating unit 207 will be described in detail later.

In a case where the detection unit 206 judges that the tracking has failed, the complementation unit 208 complements the tracking state, using the result of the identification processing by the identification unit 205, so that the object position is tracked during the period involving the tracking failure. Specifically, the complementation unit 208 complements the tracking state using the result of the identification processing by the identification unit 205, for the result of the tracking processing by the tracking unit 204 corresponding to the period involving the tracking failure, among those stored in the auxiliary storage device 214 or the like. The update processing by the complementation unit 208 will be described in detail later. The output unit 209 outputs various data, such as data obtained by the information processing apparatus 100 and data generated by the information processing apparatus 100, to an external apparatus such as the image processing apparatus 108 or the storage apparatus 104 via the communication I/F 217.

### <Operation of Information Processing Apparatus>

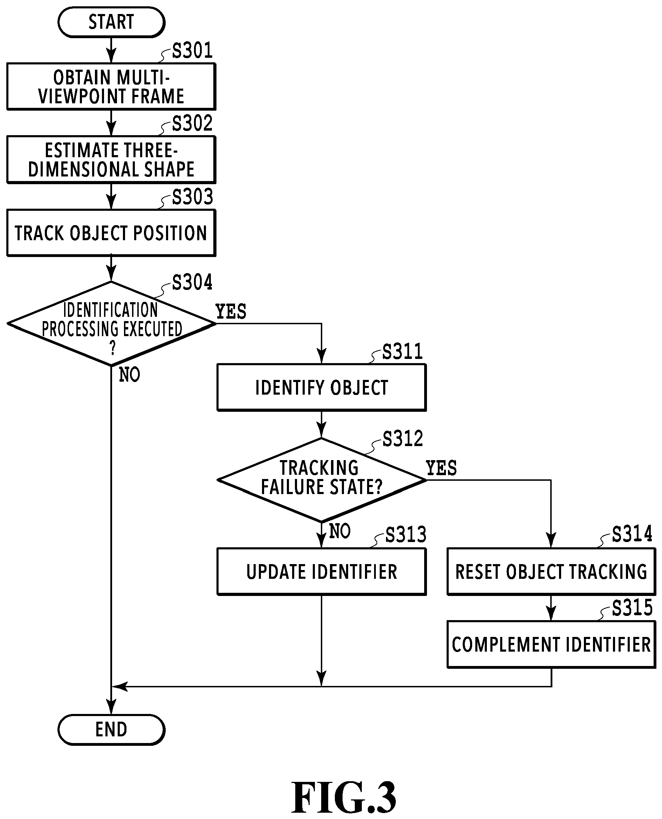

The operation of the information processing apparatus 100 will be described with reference to Fig. 3. Fig. 3 is a flowchart showing an example of a processing flow of the information processing apparatus 100 according to Embodiment 1. The information processing apparatus 100 repeatedly executes the processing of the flowchart shown in Fig. 3, for each period corresponding to a frame rate in a case where the image capturing apparatus 101 captures moving images. The processing of the flowchart shown in Fig. 3 is realized by the CPU 211 or the GPU 210 executing a computer program stored in the ROM 212 or the like, using the RAM 213 as a work memory. Each processing step (process) will be denoted by reference numeral prefixed with "S".

First, in S301, the image obtaining unit 201 obtains multi-viewpoint frame data. Next, in S302, the shape estimation unit 202 estimates a three-dimensional shape of an object, using the multi-viewpoint frame obtained in S301. The multi-viewpoint frame data obtained in S301 and the three-dimensional shape data obtained as a result of the estimation processing in S302 are stored in the auxiliary storage device 214 or the like. The multi-viewpoint frame data and the three-dimensional shape data are also outputted to the image processing apparatus 108 via the output unit 209.

Next, in S303, the tracking unit 204 performs tracking processing of the object position using at least one of some of the frames included in the multi-viewpoint frames obtained in S301 and the three-dimensional shape obtained as a result of the estimation processing in S302. The result of the tracking processing in S303 is stored as tracking data in the auxiliary storage device 214 or the like. Specifically, the tracking unit 204 performs the tracking processing of the object position, using at least one of the frames and the three-dimensional shape, and the result of the past tracking processing by the tracking unit 204 (tracking data), which has already been stored in the auxiliary storage device 214 or the like. The tracking processing in S303 will be described in detail later.

Next, in S304, the identification unit 205 judges whether to execute identification processing. Specifically, the identification unit 205 judges to execute the identification processing in a case where a given period has passed since the start of the execution of the past identification processing, and judges not to execute the identification processing in a case where the period has not passed. If it is judged in S304 that the identification processing is not to be executed, the information processing apparatus 100 ends the processing of the flowchart shown in Fig. 3. After the end of the processing of the flowchart, the information processing apparatus 100 returns to S301 and repeatedly executes the processing of the flowchart.

If it is judged in S304 that the identification processing is to be executed, then in S311, the identification unit 205 uses at least some of the plurality of frames constituting the multi-viewpoint frame obtained in S301 to identify an object contained as representation in the frame. The identification processing in S311 will be described in detail later. In the present embodiment, the processes of S303 and S311 are performed in parallel. After S311, in S312, the detection unit 206 uses the result of the tracking processing in S303 and the result of the identification processing in S311 to judge whether or not the tracking has failed as a result of the tracking processing. The judgement processing in S312 will be described in detail later.

If it is judged in S312 that the tracking has not failed, then in S313, the updating unit 207 uses the result of the identification processing in S311 to update the result of the tracking processing in S303 (tracking data). The update processing in S313 will be described in detail later. If it is judged in S312 that the tracking has failed, the information processing apparatus 100 executes the processing of S314 and S315. In S314, the complementation unit 208 resets the tracking state in the tracking unit 204 so that the tracking unit 204 does not execute the tracking processing using the result (tracking data) of the past tracking processing by the tracking unit 204, which has already been stored in the auxiliary storage device 214 or the like.

Next, in S315, the complementation unit 208 complements the tracking data using the result of the identification processing in S311, for the period in which the tracking has failed in the past, among the results (tracking data) of the tracking processing by the tracking unit 204 that are stored in the auxiliary storage device 214 or the like. The complementation processing in S315 will be described in detail later. After S313 or S315, the information processing apparatus 100 ends the processing of the flowchart shown in Fig. 3. After the end of the processing of the flowchart, the information processing apparatus 100 returns to S301 and repeatedly executes the processing of the flowchart. During the execution of the processing from S311 to S315, the processing from S301 to S304 shown in the flowchart of Fig. 3 is repeatedly executed for each period corresponding to the frame rate in a case where the image capturing apparatus 101 captures moving images.

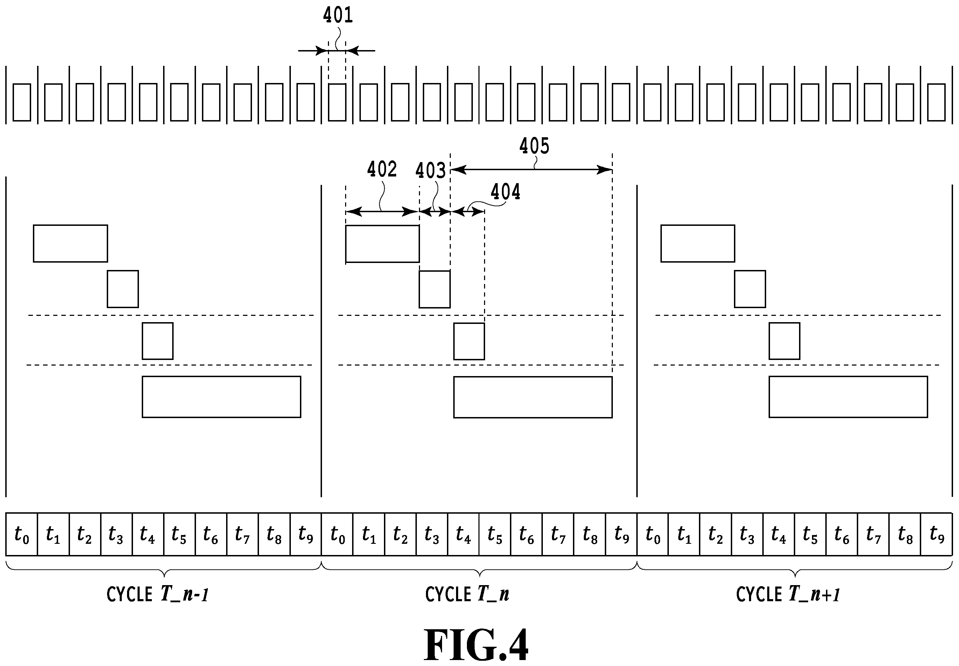

With reference to Figs. 4 to 8, description will be given of the processing of S303 and S311 to S315 by the tracking unit 204, the identification unit 205, the detection unit 206, the updating unit 207, or the complementation unit 208 will be described. Fig. 4 is a diagram for explaining processing cycles of the tracking unit 204, the identification unit 205, the detection unit 206, the updating unit 207, and the complementation unit 208, which are functional components of the information processing apparatus 100 according to Embodiment 1. In Fig. 4, a period 401 indicates a processing period required for the processing of S303 by the tracking unit 204. Similarly, a period 402 indicates a processing period required for the processing of S311 by the identification unit 205, and a period 403 indicates a processing period required for the judgement processing of S312 by the detection unit 206. A period 404 indicates a processing period required for the processing of S313 by the updating unit 207, and a period 405 indicates a processing period required for the processing of S314 and S315 by the complementation unit 208.

The following description is given assuming that each cycle T_n (n is an integer of 1 or more) has ten periods from period t0 to period t9, and the processing of S301 is executed at the start of each ti (i is an integer of 0 to 9) to obtain multi-viewpoint frame data. The following description is given also assuming that the processing of S302 is executed in the period from obtaining of the multi-viewpoint frame data to the start of the period 401 at each ti to estimate the three-dimensional shape of an object. The cycles and each period shown in Fig. 4 are merely an example, and the cycles and the processing period required for each processing are not limited thereto.

In S303, the tracking unit 204 estimates an identifier and a position of the object using at least one of the following: at least some of the frames included in the multi-viewpoint frames obtained in S301, and the three-dimensional shape data obtained as a result of the estimation processing in S302. The estimation result on the identifier and position is stored in the auxiliary storage device 214 or the like, as the result of the tracking processing (tracking data). Here, the tracking data is, for example, data in which information on the identifier and position of the object obtained through estimation by the tracking unit 204 is associated with information indicating the image capturing time of the multi-viewpoint frames used directly or indirectly for the estimation. The information indicating the image capturing time here is not limited to information indicating a time such as a relative time or absolute time with respect to a certain reference time, but may be information indirectly indicating a time, such as a frame number, or the like. Specifically, the tracking unit 204 assigns the same identifier to the same object for the result of the tracking processing based on the multi-viewpoint frames at different time points, by using the result of the past tracking processing (tracking data corresponding to a past time point) stored in the auxiliary storage device 214 or the like.

For example, the tracking unit 204 compares the estimation result of the object position based on the most recently obtained multi-viewpoint frame (hereinafter referred to as the "current position") with the estimation result of the object position based on the past multi-viewpoint frame (hereinafter referred to as the "past position"). The tracking unit 204 assigns an identifier corresponding to the past position closest to the current position, as an identifier corresponding to the current position. For example, in comparing the current position with the past position, the tracking unit 204 uses the estimation result of the object position based on the multi-viewpoint frame obtained immediately before the most recently obtained multi-viewpoint frame, as the past position. The past position used for the comparison is not limited thereto.

For example, the tracking unit 204 may use the estimation result of the object positions at two or more time points based on multi-viewpoint frames at two or more time points in the past, as the past position. Specifically, for example, the tracking unit 204 uses the estimation result of the object positions at a plurality of time points based on the multi-viewpoint frames obtained within a predetermined period or number of frames from immediately before the most recently obtained multi-viewpoint frame, as the past position. By using the estimation result of the object positions at a plurality of time points as the past position, the current position may be robustly compared with the past position, even if there is a sudden change in the object position due to an estimation error in the estimation of the object position based on the past multi-viewpoint frame. To compare the current position with the past position more robustly, processing such as position prediction using a Kalman filter or the like may be performed using the past position information and the current position information. In a case where no tracking data corresponding to a past time point is stored in the auxiliary storage device 214 or the like, the tracking unit 204 stores tracking data in which a predetermined identifier is assigned to the estimation result of the object position based on the most recently obtained multi-viewpoint frame in the auxiliary storage device 214 or the like.

As in the period 401 shown in Fig. 4, the tracking processing by the tracking unit 204 is completed in a relatively short period, such as until the next multi-viewpoint frame is obtained. The tracking method for the tracking processing by the tracking unit 204 may be any method. For example, an object position tracking method using a three-dimensional shape may be employed, as described in Japanese Patent Laid-Open No. 2024-055093. The tracking processing by the tracking unit 204 refers to tracking data corresponding to a past time point stored in the auxiliary storage device 214 or the like. Therefore, in a case where a tracking failure occurred at a past time point due to a plurality of objects crowding together or an object being occluded, the tracking failure state may still continue in subsequent tracking processing.

The method of detecting a tracking failure by the detection unit 206 will be described in detail later. In a case of detection of a tracking failure by the detection unit 206, the tracking unit 204 receives a reset signal transmitted from the complementation unit 208. After receiving the reset signal, the tracking unit 204 executes the following reset processing in the tracking processing using a multi-viewpoint frame obtained at the next time point. Specifically, in this case, the tracking unit 204 executes tracking processing based only on the multi-viewpoint frame, without using the tracking data corresponding to the past time points stored in the auxiliary storage device 214 or the like, to assign an identifier of the object and estimate the object position.

The identifier of the object contained in the tracking data will be described. There are two types of identifiers: a non-unique identifier and a unique identifier. The non-unique identifier is an identifier assigned in the tracking processing by the tracking unit 204. In the tracking processing at the same timing, non-unique identifiers are assigned to a plurality of objects so as not to overlap with each other. In the tracking processing at different timings, on the other hand, the same non-unique identifier may be assigned to different objects. Examples of the non-unique identifier include a value expressed by a natural number or the like, for example.

The unique identifier is an identifier assigned in the identification processing by the identification unit 205. The same unique identifier is assigned to the same object at any timing. Examples of the unique identifier include, in a case where the image capturing target is a sport game, for example, the name of a team participating in the game and a uniform number of a player, or a character string that can uniquely specify each player, such as the name of the player.

The identification unit 205 performs image analysis of a frame to specify the team of a player whose representation is contained in the frame and the uniform number of the player, and identifies the player from the combination thereof to assign a unique identifier corresponding to the player. Assuming that uniform numbers do not overlap among players belonging to the same team, the same unique identifier will always be assigned to objects corresponding to the same player by specifying the team of a player and the uniform number of the player. In the information processing apparatus 100, a non-unique identifier is assigned to an object in the middle of processing, and a unique identifier is eventually assigned to the object. As a result, a non-unique identifier and a unique identifier are linked to one object position, and are stored in the auxiliary storage device 214 or the like as tracking data at a certain time point.

The identifier assigned to the object position through the tracking processing by the tracking unit 204 will be described. In a case where the detection unit 206 detects a tracking failure, or in a case where tracking data corresponding to a past time point is not stored in the auxiliary storage device 214 or the like and the tracking unit 204 does not use the tracking data in the tracking processing, the tracking unit 204 assigns a non-unique identifier to the object position. In a case where the detection unit 206 detects no tracking failure, and tracking data corresponding to a past time point is stored in the auxiliary storage device 214 or the like and the tracking unit 204 uses the tracking data in the tracking processing, the tracking unit 204 executes the following processing. In this case, the tracking unit 204 inherits and assigns to the object position the linking relationship between the non-unique identifier and the unique identifier in the tracking data corresponding to the past time point.

For example, in a case where the tracking data corresponding to the past time point includes a unique identifier and a non-unique identifier, the tracking unit 204 assigns the unique identifier and the non-unique identifier as identifiers of tracking data corresponding to a multi-viewpoint frame being processed. In a case where the tracking data corresponding to the past time point includes no unique identifier and includes only the non-unique identifier, the tracking unit 204 assigns only the non-unique identifier as the identifier of the tracking data corresponding to the multi-viewpoint frame being processed. In this case, the non-unique identifier assigned by the tracking unit 204 is linked to a unique identifier in the subsequent processing by the identification unit 205, the updating unit 207, or the complementation unit 208.

### <Identification Processing by Identification Unit>

The identification processing by the identification unit 205 will be described. First, the identification unit 205 obtains color information of an image region including an representation of an object in each of the frames constituting a multi-viewpoint frame to be processed, based on an identifier and an object position obtained as a result of tracking processing by the tracking unit 204 corresponding to the image capturing time of the multi-viewpoint frame. A method of obtaining the color information of the image region will be described later. The identification unit 205 then determines a unique identifier corresponding to the object by specifying the object using the obtained color information, and transmits the determined unique identifier to the detection unit 206. For example, the identification unit 205 performs the identification processing only on the multi-viewpoint frames obtained at the start of the period t0 for each cycle T_n shown in Fig. 4, and executes the identification processing over a relatively long period such as the period 402 shown as an example in Fig. 4.

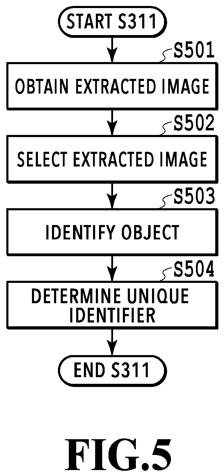

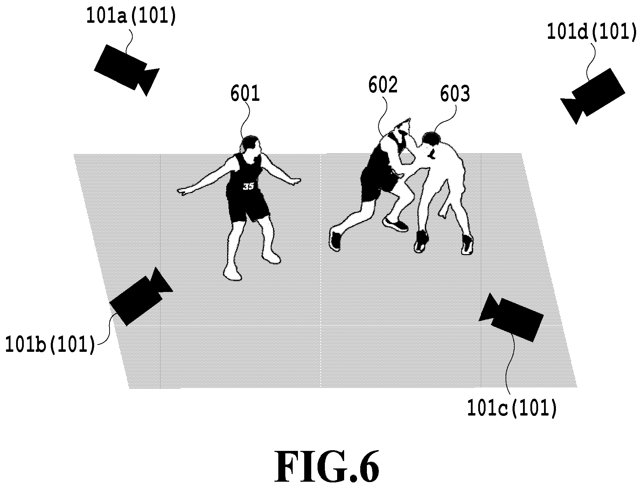

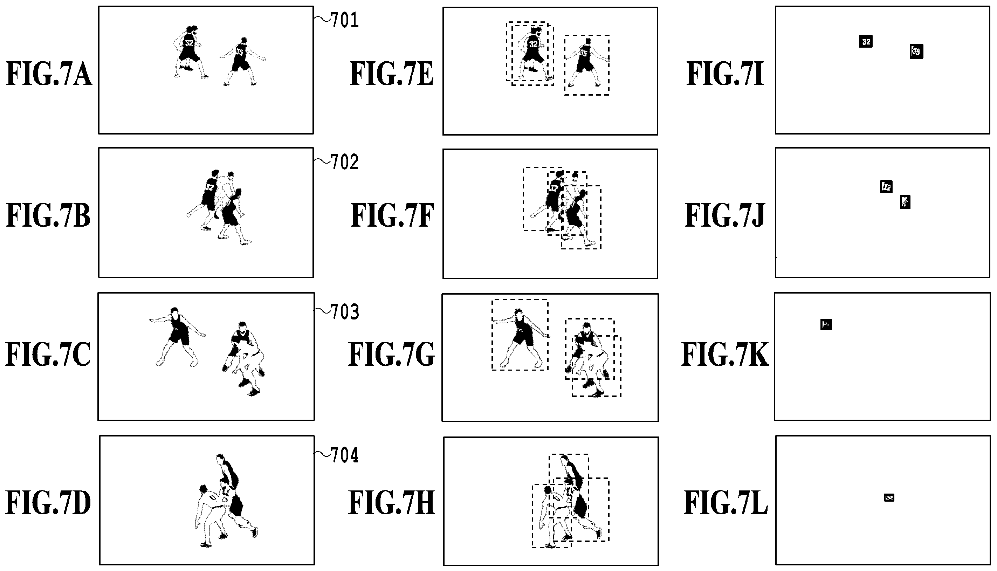

Fig. 5 is a flowchart showing an example of the flow of the identification processing by the identification unit 205 according to Embodiment 1, and is a flowchart showing an example of the processing flow in S311 shown in Fig. 3. Fig. 6 is a diagram showing an example of an image capturing scene in the information processing system according to Embodiment 1. Figs. 7A to 7L are diagrams for explaining an example of the identification processing by the identification unit 205 according to Embodiment 1.

First, in S501, the identification unit 205 obtains an image (hereinafter referred to as an "extracted image") obtained by extracting an image region including an representation of an object from each of the frames constituting the multi-viewpoint frame obtained in S301. As an example, an image capturing scene shown in Fig. 6 in which objects 601 to 603 are present in an image capturing space will be described. In Fig. 6, the objects 601 to 603 present in the image capturing space are captured by the image capturing apparatuses 101 (image capturing apparatuses 101a to 101d) installed so as to surround the image capturing space from different directions. Figs. 7A to 7D sequentially show captured images (frames 701 to 704) obtained by image capturing with the image capturing apparatuses 101a to 101d shown in Fig. 6, respectively.

The identification unit 205 extracts an image region including an representation of an object from frames constituting a multi-viewpoint frame to be processed, using the identifier and object position information obtained as a result of the tracking processing by the tracking unit 204, corresponding to the image capturing time of the multi-viewpoint frame. Specifically, the identification unit 205 uses the identifier and object position information to extract regions surrounded by dashed lines in Figs. 7E to 7H from the frames 701 to 704 as image regions including object images. For example, the identification unit 205 back-projects a three-dimensional region such as a bounding box that is predetermined for each position toward the viewing angle of each image capturing apparatus 101, based on the object position for each frame. The identification unit 205 extracts the image region by cutting out only the regions surrounded by the dashed lines in Figs. 7E to 7H from each frame by the back projection. The identification unit 205 obtains color information of the extracted image region as the extracted image.

The identification unit 205 links the extracted image to an identifier so as to enable subsequent specification as to which identifier corresponds to the object position based on which the extracted image was obtained. For example, a plurality of extracted images linked to the same identifier are managed as a group of extracted images belonging to the same group. In the tracking processing by the tracking unit 204, in a case where the linking relationship between the non-unique identifier and the unique identifier in the tracking data corresponding to a past time point is inherited and assigned to the object position, the identification unit 205 links the unique identifier to the extracted image. That is, in the tracking processing by the tracking unit 204, in a case where the object position is linked to a non-unique identifier and a unique identifier, the identification unit 205 links the unique identifier to the extracted image. On the other hand, in a case where the object position is linked to no unique identifier, the identification unit 205 may link a non-unique identifier to the extracted image. In this way, by cutting out and obtaining some image regions from the frame as an extracted image, the amount of data is reduced compared to obtaining the frame as it is, and the amount of data transmission or the computation amount in subsequent processing can be reduced.

After S501, in S502, the identification unit 205 selects, from among the extracted images obtained in S501, an extracted image from which an object may be accurately identified. Depending on the image content, the object may not be accurately identified from some extracted images. Therefore, for example, the identification unit 205 selects extracted images by discarding information of extracted images from which the object may not be accurately identified, from among the extracted images obtained in S501. For example, for an extracted image in which an object is partially or entirely occluded by another object or a structure such as a goal, a part of the feature amount cannot be extracted in the identification processing of S503 to be described later. As a result, a correct identification result cannot be obtained for such extracted images. If a correct identification result cannot be obtained as described above, there is a possibility that an erroneous unique identifier will be determined in processing of determining a unique identifier in S504 to be described later. Therefore, in order to improve the accuracy of the identification processing, in S502, the identification unit 205 discards such extracted images and selects only useful extracted images.

In the present embodiment, a method for the selection processing is not particularly limited. For example, the identification unit 205 may select useful extracted images by superimposing a silhouette image of a structure given in advance on the extracted image and discarding extracted images overlapping with the silhouette of the structure by a certain amount or more. Alternatively, for example, the identification unit 205 may select extracted images using a three-dimensional shape of an object. Specifically, for example, the identification unit 205 first generates a depth map indicating a distance from the position of each image capturing apparatus 101 to the object. Then, in a case where the difference between the maximum and minimum depth values of a space in which an object corresponding to a certain image capturing apparatus 101 exists is equal to or greater than a certain value, the identification unit 205 judges that a plurality of objects may exist in the space. In this case, the identification unit 205 discards the extracted image extracted from the frame obtained through image capturing by the image capturing apparatus 101. This is because in a case where a plurality of objects exist in a local space, a target object may be occluded by another object.

After S502, in S503, the identification unit 205 identifies an object upon receipt of one or more extracted images selected in S502. The following description is given of an example where the identification target is a player in a game, specifically, the identification unit 205 specifies the player's uniform number and uniform color from the extracted image. To specify the player's uniform number, in a case where the extracted images corresponding to the regions surrounded by the dashed lines shown in Figs. 7E to 7H are inputted, for example, image regions containing representations of uniform numbers are first detected as shown in Figs. 7I to 7L. Next, the numbers contained in the image regions are specified by image analysis using a technique such as optical character recognition for each of the detected image regions. The uniform colors are specified, for example, by matching color information around the image regions containing the representations of the uniform numbers shown in Figs. 7I to 7L with information on a plurality of pre-registered uniform colors and specifying a color with most similar color information (pixel value). The identification unit 205 subsequently combines the specified uniform number and the uniform color to identify an object contained as representation in the extracted image to be processed.

A method for object identification processing by the identification unit 205 is not limited to the above-mentioned method. For example, the identification unit 205 may identify objects by an identification method using a learned model obtained as a result of learning by machine learning. Alternatively, for example, in a case where the identification unit 205 specifies the uniform number using a step-by-step method for performing character recognition after detecting a character region, the identification unit 205 may perform the same processing as the selection processing of S502 again between the character region detection processing and the character recognition processing. This is because the character region to be subjected to character recognition is further narrowed down based on the result of the character region detection, and thus the uniform number may be more accurately specified.

After S503, in S504, the identification unit 205 determines a unique identifier for the object, based on the result of the object identification in S503. If a plurality of extracted images are received in the identification processing of S503, a plurality of different unique identifiers may be determined in the determination processing of S504 for one identifier linked to the object position used in the identification processing by the identification unit 205. In such a case, for example, the identification unit 205 determines the largest number of unique identifiers among the plurality of determined unique identifiers, as the unique identifier of the object. After S504, the identification unit 205 ends the processing of the flowchart shown in Fig. 5, that is, the processing of S311. Through the above processing, the unique identifier determined by the identification unit 205 is linked to the identifier linked to the object position used in the identification processing by the identification unit 205, and then transmitted to the detection unit 206.

### <Tracking Failure Judgement Processing by Detection Unit>

The tracking failure detection processing, that is, the tracking failure judgement processing by the detection unit 20 will be described. The detection unit 206 receives an identifier assigned by the tracking unit 204 and a unique identifier determined by the identification unit 205 and linked to the identifier, and judges whether or not the tracking by the tracking unit 204 has failed. The judgement processing by the detection unit 206 is executed in a period 403 following the period 402 of the identification processing by the identification unit 205, as shown in Fig. 4 as an example.

Specifically, the detection unit 206 receives, as the identifier assigned by the tracking unit 204, an identifier assigned by the tracking unit 204 using a three-dimensional shape estimated based on a multi-viewpoint frame obtained at the start of the period t0 of the target cycle T_n. The detection unit 206 also receives, as the unique identifier determined by the identification unit 205, a unique identifier determined by the identification unit 205 based on the multi-viewpoint frame. Therefore, the detection unit 206 judges whether or not the tracking has failed at the period t0 of the target cycle T_n. The detection unit 206 detects a tracking failure in each cycle T_n. Therefore, in a case where a tracking failure is detected at the period t0 of the target cycle T_n, it may be estimated that the tracking failure occurred between the period t0 of the target cycle T_n and a period t1 of a previous cycle T_n-1.

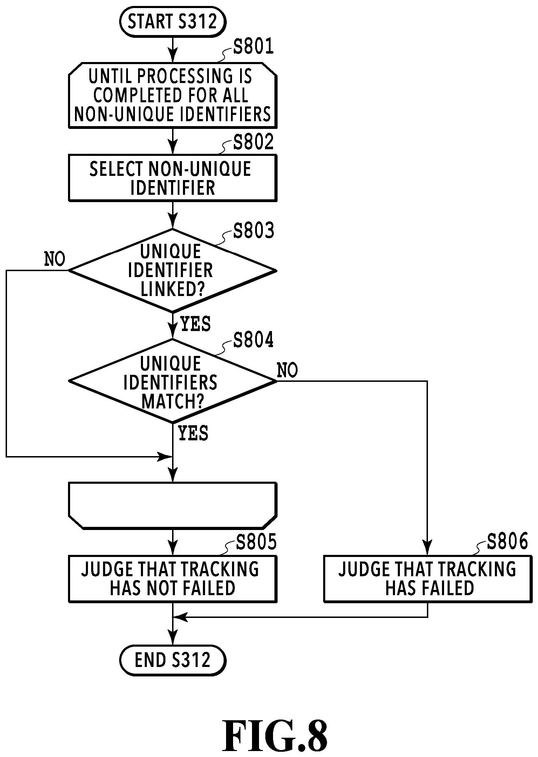

Fig. 8 is a flowchart showing an example of the flow of the judgment processing by the detection unit 206 according to Embodiment 1, and is a flowchart showing an example of the processing flow of S312 shown in Fig. 3. The detection unit 206 executes the processing from S802 to S804 in a loop until the processing is completed for all non-unique identifiers assigned in the tracking processing by the tracking unit 204. In the loop processing, first, in S802, the detection unit 206 selects an arbitrary non-unique identifier from among one or more non-unique identifiers assigned by the tracking unit 204. Hereinafter, the non-unique identifier selected in S802 will be referred to as a "selected identifier". In the loop processing, the detection unit 206 selects an arbitrary non-unique identifier yet to be selected from among one or more non-unique identifiers assigned by the tracking unit 204 during the selection processing in S802.

In the tracking processing by the tracking unit 204, the linking relationship between the non-unique identifier and the unique identifier in the tracking data corresponding to the past time point is inherited and assigned to the object position. Therefore, in a case where a unique identifier is linked to the selected identifier in the tracking processing by the tracking unit 204 based on the multi-viewpoint frame time point to be processed, the detection unit 206 compares the unique identifier linked to the selected identifier in the tracking processing by the tracking unit 204 with the unique identifier linked to the selected identifier in the identification processing by the identification unit 205. Specifically, first, in S803, the detection unit 206 judges whether or not any unique identifier is linked to the selected identifier in the tracking data corresponding to the processing time point. If it is judged in S803 that the unique identifier is not linked to the selected identifier, that is, in a case where only the selected identifier is assigned in the tracking processing, there is no unique identifier to compare with, and therefore the detection unit 206 skips S804 to be described later.

If it is judged in S803 that the unique identifier is linked to the selected identifier, the detection unit 206 executes the processing of S804. In this case, in S804, the detection unit 206 judges whether or not the unique identifier linked to the selected identifier in the tracking processing by the tracking unit 204 matches the unique identifier linked to the selected identifier in the identification processing by the identification unit 205. If it is judged in S804 that the unique identifiers match, the loop processing continues. If it is judged in S804 that the unique identifiers do not match, the detection unit 206 ends the loop processing and ends the processing of S806. In S806, the detection unit 206 judges that the tracking by the tracking unit 204 has failed. As the processing of S803 and S804 is completed for all non-unique identifiers and the loop processing is completed, the detection unit 206 judges in S805 that the tracking by the tracking unit 204 has not failed. After S805 or S806, the detection unit 206 ends the processing of the flowchart shown in Fig. 8, that is, the processing of S312 shown in Fig. 3.

### <Update Processing by Updating Unit>

The update processing by the updating unit 207 will be described. In a case where the detection unit 206 judges that the tracking has not failed, the updating unit 207 executes update processing to link the unique identifier to the non-unique identifier for the tracking data stored in the auxiliary storage device 214 or the like. Specifically, the updating unit 207 links the unique identifier to the non-unique identifier for the tracking data in which the non-unique identifier is not linked to the unique identifier. The tracking data to be subjected to the update processing by the updating unit 207 is, for example, tracking data corresponding to the following period. Specifically, the target tracking data is tracking data corresponding to a period from the end of the period 403 of the judgement processing by the detection unit 206 in the cycle T_n-1 preceding the target cycle T_n to the end of the period 403 of the judgement processing by the detection unit 206 in the cycle T_n. More specifically, the tracking data to be subjected to the update processing by the updating unit 207 is tracking data having a non-unique identifier to which no unique identifier is linked, among the tracking data corresponding to the period.

The determination of the unique identifier based on the multi-viewpoint frame obtained in the period t0 of each cycle T_n by the identification unit 205 is made as a result of identification processing executed over the period 402 from the period t1 to the period t3 shown in Fig. 4, for example. The judgement processing by the detection unit 206 is executed, for example, in the period 403 shown in Fig. 4, that is, the period t4. Therefore, the tracking unit 204 inherits the linking relationship between the non-unique identifier and the unique identifier using the linking relationship in the period t0 of the cycle T_n-1 during the period from the period t1 of the cycle T_n-1 preceding the target cycle T_n to the period t3 of the target cycle T_n.

In other words, an object for which no unique identifier is linked to a non-unique identifier during a period from the period t5 of the cycle T_n-1 to the period t4 of the cycle T_n is as follows. Specifically, the object is one that is not identified by the identification processing based on the multi-viewpoint frame obtained in the period t0 of the cycle T_n-1 by the identification unit 205, such as an object that has newly appeared after the period t1 of the cycle T_n-1. For example, it is assumed that an object appears within a certain cycle T_n and then does not disappear within the cycle T_n. Under such conditions, the linking relationship in the period t0 of the target cycle T_n can be used to determine a unique identifier for an object that has newly appeared after the period t1 of the cycle T_n-1.

As described above, the updating unit 207 links the unique identifier determined by the identification unit 205 to all non-unique identifiers that are not linked to unique identifiers in the past tracking data stored in the auxiliary storage device 214 or the like. The target range for this linking is tracking data corresponding to the period from any time point in the cycle T_n-1 preceding the target cycle T_n to the time point at which the processing by the updating unit 207 in the target cycle T_n is completed. By executing the update processing by the updating unit 207 in accordance with the cycle of the identification processing by the identification unit 205, the unique identifiers may be linked to all non-unique identifiers in the tracking data.

In the update processing by the updating unit 207, the following method may be used as a method for linking unique identifiers to non-unique identifiers in the tracking data. For example, first, the updating unit 207 specifies tracking data to which the same non-unique identifier as the non-unique identifier assigned by the tracking unit 204 is assigned, based on the multi-viewpoint frame to be processed by the identification unit 205. The updating unit 207 then updates the tracking data so that the linking relationship of the specified tracking data becomes the same as the linking relationship between the non-unique identifier and the unique identifier by the identification unit 205.

### <Complementation Processing by Complementation Unit>

The complementation processing by the complementation unit 208 will be described. In a case where the detection unit 206 judges that the tracking has failed, the complementation unit 208 executes complementation processing to correct the linking of the unique identifier to the non-unique identifier for the tracking data during the tracking failure period stored in the auxiliary storage device 214 or the like. In a case where the detection unit 206 judges that the tracking has failed, the complementation unit 208 executes the complementation processing during the period 405 shown in Fig. 4 as an example.

The period of tracking data to be subjected to the complementation processing by the complementation unit 208 is divided into two periods. The first period is the period from the period in which the multi-viewpoint frame to be subjected to the identification processing by the identification unit 205 in the target cycle T_n is obtained to the period in which the multi-viewpoint frame to be subjected to the identification processing by the identification unit 205 in the cycle T_n-1 preceding the target cycle T_n is obtained. Specifically, for example, this period is the period from the period t1 to the period t9 in the cycle T_n-1 preceding the target cycle T_n in Fig. 3 in which a tracking failure may have occurred. This is because the detection processing by the detection unit 206 and the complementation processing by the complementation unit 208 periodically detect a tracking failure and restore the failure. Specifically, in a case where a tracking failure is detected in the cycle T_n-1 preceding the target cycle T_n, the tracking failure is always restored up to the period in which the multi-viewpoint frame to be subjected to the identification processing by the identification unit 205 in the cycle T_n-1 was obtained.

As a method for complementing the tracking data in the first period, for example, there is a method of tracking the object position as if rewinding time, as described in Japanese Patent Laid-Open No. 2024-055093. Specifically, for example, the unique identifier and the object position determined by the identification processing by the identification unit 205 based on the multi-viewpoint frame obtained in the period t0 of the cycle shown in Fig. 3 are used as initial conditions to make corrections in the order of the periods t9, t8, t7, ..., t1 of the cycle T_n-1. As another method for complementing the tracking data in the first period, for example, the following method is also available. For the unique identifiers determined in the periods t0 of both cycles T_n and T_n-1, the object positions from the period t1 to the period t9 of the cycle T_n-1 are complemented using a keyframe interpolation method with the periods t0 of both cycles T_n and T_n-1 as keyframes. By using the past object position and the future object position in this way, errors in the object positions are less likely to accumulate, resulting in more accurate complementation, compared to a case of using one of the object positions.

The second period is the period from the period in which the multi-viewpoint frame to be subjected to the identification processing by the identification unit 205 of the target cycle T_n is obtained until the detection processing by the detection unit 206 is completed and a tracking failure is detected. Specifically, this period is the period from the period t1 to the period t5 of the cycle T_n shown in Fig. 3 as an example. The tracking state in the tracking unit 204 is reset so that the tracking unit 204 performs tracking processing without using the results of past tracking processing until the time point the tracking failure is detected by the detection unit 206. However, the tracking unit 204 continues to execute the tracking processing using the results of tracking processing in the tracking failure state up to that time point. Therefore, also for the second period described above, a correct unique identifier needs to be linked to the non-unique identifier of the tracking data.

The following method can be used to complement the tracking data for the second period. For example, the unique identifier and the object position determined by the identification processing based on the multi-viewpoint frame obtained by the identification unit 205 in the period t0 of the cycle T_n are used as initial conditions to correct the tracking data by the method described in Japanese Patent Laid-Open No. 2024-055093. The information processing apparatus 100 can restore the tracking failure in the cycle T_n-1 preceding the target cycle T_n and the target cycle T_n by complementing the tracking data of the two periods as described above, and can store the correct tracking data in the auxiliary storage device 214 or the like.

### <Configuration of Image Processing Apparatus>

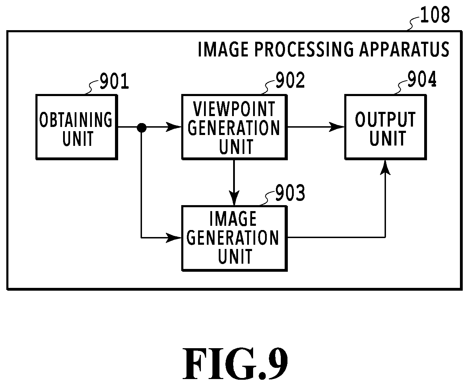

A configuration of the image processing apparatus 108 will be described with reference to Fig. 9. Fig. 9 is a block diagram showing an example of a functional configuration of the image processing apparatus 108 according to Embodiment 1. A hardware configuration of the image processing apparatus 108 may be the same as the hardware configuration of the information processing apparatus 100 shown in Fig. 2A as an example. Therefore, description of the hardware configuration of the image processing apparatus 108 will be omitted. The image processing apparatus 108 includes an obtaining unit 901, a viewpoint generation unit 902, an image generation unit 903, and an output unit 904. The obtaining unit 901 obtains various data such as data of a multi-viewpoint frame outputted from the information processing apparatus 100, camera parameters of the image capturing apparatus 101 that captured each of the frames constituting the multi-viewpoint frame, three-dimensional shape data corresponding to an object, and tracking data.

The viewpoint generation unit 902 generates information (hereinafter referred to as "virtual viewpoint information") related to a virtual viewpoint used in generating a virtual viewpoint image. The virtual viewpoint information includes information related to the position of the virtual viewpoint and the direction of the viewing direction at the virtual viewpoint (hereinafter referred to as "virtual viewpoint direction"), that is, information corresponding to the extrinsic parameters of the image capturing apparatus. The virtual viewpoint information may also include information corresponding to the intrinsic parameters and distortion parameters of the image capturing apparatus, in addition to the information related to the position and direction of the virtual viewpoint. The virtual viewpoint information may also include time-related information, and may be time-series information related to the positions and directions of the virtual viewpoint, in which such time-related information is associated with the information related to the position and direction of the virtual viewpoint. The processing of determining the position and direction of the virtual viewpoint by the viewpoint generation unit 902 will be described later.

The image generation unit 903 generates a virtual viewpoint image using the various data obtained by the obtaining unit 901 and the virtual viewpoint information generated by the viewpoint generation unit 902. Since a well-known technology is used to generate the virtual viewpoint image, detailed description of the virtual viewpoint image generation processing will be omitted. The output unit 904 outputs the virtual viewpoint image generated by the image generation unit 903 to the display apparatus 109 and causes the display apparatus 109 to display the virtual viewpoint image. The output unit 904 may output one virtual viewpoint image to two or more display apparatuses 109 simultaneously and cause each display apparatus 109 to display the virtual viewpoint image. In a case where the image generation unit 903 simultaneously generates a plurality of virtual viewpoint images, the output unit 904 may output each of the plurality of virtual viewpoint images generated by the image generation unit 903 to different display apparatuses 109. In this case, the output unit 904 may output some or all of the plurality of virtual viewpoint images to one display apparatus 109.

The processing of determining the position and direction of a virtual viewpoint by the viewpoint generation unit 902 will be described. For example, the user inputs a unique identifier corresponding to a target object via the input apparatus 110. The viewpoint generation unit 902 retrieves a unique identifier identical to the inputted unique identifier from the tracking data obtained by the obtaining unit 901, and obtains information on the object position linked to the unique identifier in the tracking data. The viewpoint generation unit 902 then determines the position and direction of the virtual viewpoint so that the virtual viewpoint is directed to a center point, which is the obtained object position, on a spherical surface with an adjustable radius, for example. The radius of the spherical surface and the position on the spherical surface are inputted by the user via the input apparatus 110, for example.

The user can also input the time of the virtual viewpoint image to be displayed on the display apparatus 109 via the input apparatus 110, specifically, the times corresponding to the start and end of the period of the virtual viewpoint image to be displayed on the display apparatus 109, for example. Here, the period of the virtual viewpoint image to be displayed on the display apparatus 109 is, for example, a period corresponding to a highlight scene or a digest scene.

In this case, the obtaining unit 901 transmits to the information processing apparatus 100 an output request for the multi-viewpoint frame data corresponding to the inputted period, the three-dimensional shape data corresponding to the object, and the tracking data. Upon receipt of the output request from the image processing apparatus 108, the information processing apparatus 100 reads various data corresponding to the period from the auxiliary storage device 214 or the like. The read data is outputted to the image processing apparatus 108 via the output unit 209. The obtaining unit 901 receives the data outputted from the information processing apparatus 100. The viewpoint generation unit 902 or the image generation unit 903 uses the data obtained by the obtaining unit 901 to generate virtual viewpoint information and virtual viewpoint images. The generated virtual viewpoint images are displayed on the display apparatus 109 in chronological order. In the information processing apparatus 100, a tracking failure is restored in tracking the object position in the past scene. Therefore, the information processing system according to Embodiment 1 makes it possible to generate a virtual viewpoint image that accurately tracks an object corresponding to a unique identifier designated by the user in generation of a virtual viewpoint image of a highlight scene or a digest scene.

In the present embodiment, the information processing apparatus 100 is configured to use both the tracking processing and the identification processing to link the object position with the unique identifier and track the object position. The information processing apparatus 100 is also configured to periodically detect a tracking failure and relink the unique identifier for the period in the tracking failure state. The information processing apparatus 100 thus configured makes it possible to accurately track the object position even in a case where tracking is difficult using normal tracking processing, such as a case where a plurality of objects crowd together. The information processing apparatus 100 also makes it possible to reduce the total amount of computation by executing the identification processing, the detection processing of the tracking failure, the update processing by the updating unit 207, and the complementation processing by the complementation unit 208 with a different cycle from the tracking processing.

### [Embodiment 2]

In Embodiment 1, the description is given of the aspect where the identification unit 205 obtains an extracted image based on the identifier and object position obtained by the tracking processing by the tracking unit 204, and executes the identification processing on the obtained extracted image. The information processing apparatus 100 according to Embodiment 1 can reduce the data amount or the like by obtaining the extracted image as described above.

However, there is a case that, in a state where a plurality of objects crowd together, two or more objects that are close to each other is regarded as one object and a three-dimensional shape is estimated. In such a case, one non-unique identifier is assigned to two or more objects. In other words, if the above-mentioned situation occurs in the tracking processing by the tracking unit 204, a non-unique identifier that should be assigned will not be assigned to some of the two or more objects. For an object to which no non-unique identifier is assigned, object identification is not performed since no extracted image is obtained, and no unique identifier is determined in the identification processing by the identification unit 205. Since no unique identifier is determined in the identification processing by the identification unit 205, a tracking failure cannot be detected for such an object in the detection processing by the detection unit 206.

In Embodiment 2, description will be given of a aspect of enabling detection of a tracking failure and enabling correction of tracking data in a case of detection of a tracking failure, even if the above-mentioned situation occurs in the tracking processing by the tracking unit 204. An information processing system according to Embodiment 2 has the same configuration as the configuration shown in Fig. 1 as an example, and thus description of the configuration of the information processing system will be omitted. An image processing apparatus 108 according to Embodiment 2 also has the same configuration as the configuration shown in Figs. 2A and 9 as an example, and thus description of the configuration of the image processing apparatus 108 will be omitted. An information processing apparatus 100 according to Embodiment 2 also has the same hardware configuration as the configuration shown in Fig. 2A as an example, and thus description of the hardware configuration of the information processing apparatus 100 will be omitted.

As in Fig. 2B, the information processing apparatus 100 according to Embodiment 2 includes, as its functional configuration, an image obtaining unit 201, a shape estimation unit 202, a tracking unit 204, an identification unit 205, a detection unit 206, an updating unit 207, a complementation unit 208, and an output unit 209. However, the identification unit 205 and the detection unit 206 according to Embodiment 2 execute different processings from those by the identification unit 205 and the detection unit 206 according to Embodiment 1. Such differences from Embodiment 1 will be described below, and description of the same processing as in Embodiment 1 will be omitted.

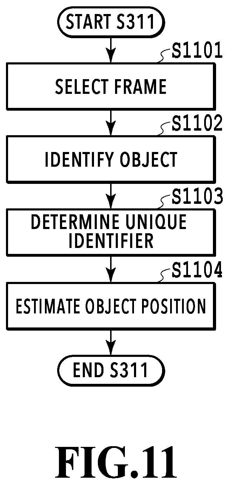

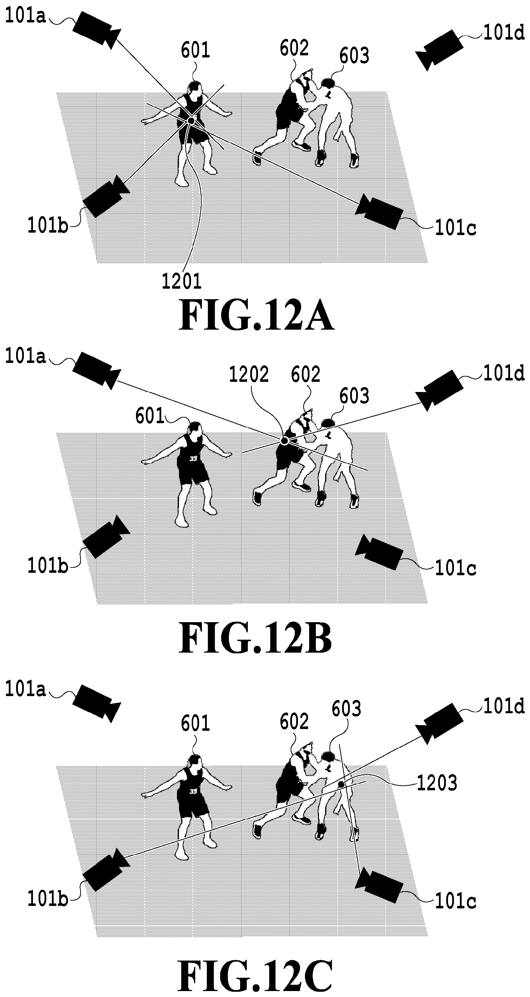

With reference to Figs. 11 and 12, the identification processing by the identification unit 205 according to Embodiment 2 (hereinafter simply referred to as the "identification unit 205") will be described. The identification unit 205 estimates a unique identifier corresponding to an object and an object position. Specifically, the identification unit 205 estimates the unique identifier corresponding to the object and the object position based on a multi-viewpoint frame obtained by the image obtaining unit 201 and a three-dimensional shape estimated by the shape estimation unit 202.

Fig. 11 is a flowchart showing an example of the flow of the identification processing by the identification unit 205 according to Embodiment 2, and is a flowchart showing an example of the processing flow in S311 shown in Fig. 3. Hereinafter, processing steps in which the same processes as those shown in Figs. 3 and 5 are executed will be denoted by the same reference numerals, and description thereof will be omitted. First, in S1101, the identification unit 205 uses the three-dimensional shape estimated in S302 to select a frame that may accurately identify the object, from among the frames constituting the multi-viewpoint frame obtained in S301.

In S1101, the identification unit 205 may select the frame that may accurately identify the object as a frame, or may extract some image regions from each frame as preprocessing for S1101 and select each of the extracted image regions. Specifically, as the preprocessing for S1101, the identification unit 205 extracts an image region containing representation of the object by a background difference method using a background image in which no prepared object is present. The identification unit 205 then selects an image region that may accurately identify the object from among the image regions extracted from each frame. In the processing of S1101, the identification unit 205 is described as, but not limited to, selecting a frame from among all frames constituting the multi-viewpoint frame obtained in S301. For example, the identification unit 205 may select a frame from among frames captured by some predetermined image capturing apparatuses out of all the frames.

After S1101, in S1102, the identification unit 205 identifies the object by executing the same processing as in S503, upon receipt of one or more frames selected in S1101. The identification unit 205 then executes the processing of S504. After S504, in S1105, the identification unit 205 estimates the position of the object corresponding to the unique identifier determined in S504. After S1105, the identification unit 205 ends the processing of the flowchart shown in Fig. 11, that is, the processing of S311 shown in Fig. 3.

The following method may be used to estimate the object position. Specifically, the identification unit 205 first projects an image region in which characters are detected in each frame onto a three-dimensional space, based on the result of two-dimensional character detection processing for each frame in the identification processing in S503. The identification unit 205 then estimates the nearest neighbor point in a plurality of projections from each frame as the object position. The projection of the image region in each frame onto the three-dimensional space is performed as follows, for example. The image region is projected from the optical center of the image capturing apparatus that captured the frame toward the center position of a rectangle that is the result of character detection in the frame, as shown in Figs. 7I to 7L, to a point at infinity in that direction. The method of projecting the image region in the frame onto the three-dimensional space is not limited to the above. For example, the three-dimensional shape estimated in S302 may be used to project the image region from the optical center of the image capturing apparatus toward the center position of the rectangle that is the result of character detection to the position of the three-dimensional shape that is first reached.

The method of estimating the object position in S1105 will be described with reference to Figs. 12A to 12C. Figs. 12A to 12C are diagrams for explaining an example of the method of estimating the object position by the identification unit 205 according to Embodiment 2. As shown in Figs. 12A to 12C, the object position is estimated for each object. Specifically, the image region in the frame is projected onto the three-dimensional space based on the result of character recognition of each image region in which characters are detected in S503, that is, the image region having the same unique identifier determined in S504. Then, as shown in Figs. 12A to 12C, the identification unit 205 obtains the position of the nearest neighbor point of the plurality of projections, using only the projection of the image region corresponding to the same unique identifier projected onto the three-dimensional space. Points 1201 to 1203 shown in Figs. 12A to 12C are the positions of the nearest neighbor points corresponding to the objects 601 to 603, respectively, and indicate the positions of the nearest neighbor points calculated for each object. The identification unit 205 calculates three-dimensional coordinates of the nearest neighbor points, and the calculated three-dimensional coordinates are the result of estimating the position of the object corresponding to the unique identifier.

The above-mentioned processing allows the position of each object to be estimated separately from other objects, thus improving the estimation accuracy of the object position and reducing the amount of computation required for estimation. The identification unit 205 according to the present embodiment can assign unique identifiers to objects without omissions or overlaps and estimate the object position without relying on the results of the assignment of non-unique identifiers by the tracking unit 204.

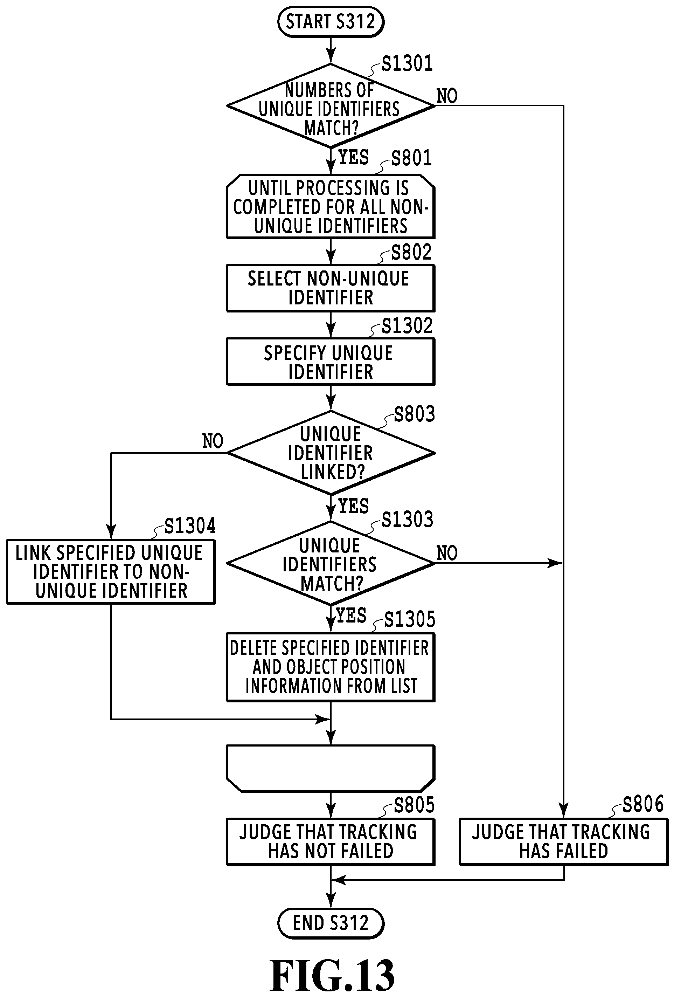

The judgement processing by the detection unit 206 according to Embodiment 2 (hereinafter simply referred to as the "detection unit 206") will be described with reference to Fig. 13. The detection unit 206 judges whether or not tracking has failed. Specifically, the detection unit 206 first compares the unique identifier determined through the identification processing by the identification unit 205 and the estimated object position with the unique identifier and object position linked to each other through the tracking processing by the tracking unit 204. The detection unit 206 then judges whether or not the tracking has failed by judging whether or not unique identifiers match, whose object positions match or approximately match. The difference from the judgement processing by the detection unit 206 according to Embodiment 1 is that the unique identifiers are compared not only in terms of their values but also in terms of the number of unique identifiers and the object positions. Here, in the identification processing by the identification unit 205, unique identifiers are not linked to non-unique identifiers. Therefore, the detection unit 206 specifies and then compares the unique identifiers whose object positions are closest to each other in the object position estimated by the tracking processing and the object position estimated by the identification processing.

Fig. 13 is a flowchart showing an example of the flow of the judgement processing by the detection unit 206 according to Embodiment 2, and is a flowchart showing an example of the processing flow of S312 shown in Fig. 3. First, in S1301, it is judged whether or not the number of unique identifiers inherited from the past tracking data through the tracking processing by the tracking unit 204 matches the number of unique identifiers determined through the identification processing by the identification unit 205. If it is judged in S1301 that the numbers of the unique identifiers do not match, it means that there was omission or overlap in the assignment of identifiers in the tracking processing by the tracking unit 204. Therefore, in this case, the detection unit judges in S806 that the tracking by the tracking unit 204 has failed.

If it is judged in S1301 that the numbers of the unique identifiers match, the processing from S802 to S1305 shown in Fig. 13 is executed in a loop until the processing is completed for all non-unique identifiers assigned in the tracking processing by the tracking unit 204. In the present embodiment, the information on the plurality of identifiers and object positions obtained through the tracking processing by the tracking unit 204 and the information on the unique identifiers and object positions obtained through the identification processing by the identification unit 205 are listed and stored in the RAM 213. The listed information is sorted according to whether or not there is a unique identifier for executing the processing described below as appropriate, and the non-unique identifier linked to the unique identifier is processed first.

In the loop processing, first, the detection unit 206 executes the processing of S802 to select an arbitrary non-unique identifier (selected identifier) from among one or more non-unique identifiers assigned by the tracking unit 204. After S802, the detection unit 206 executes processing of S1302. In S1302, the detection unit 206 specifies an object position closest to the object position linked to the selected identifier from among the plurality of object positions obtained through the identification processing by the identification unit 205, and specifies the unique identifier linked to the object position. Next, the detection unit 206 executes the processing of S803 to judge whether or not a unique identifier is linked to the selected identifier selected in S802. If it is judged in S803 that no unique identifier is linked, the detection unit 206 executes processing of S1304. In S1304, the detection unit 206 links the unique identifier specified in S1302 to the selected identifier for the tracking data corresponding to the selected identifier stored in the auxiliary storage device.

If it is judged in S803 that a unique identifier is linked, the detection unit 206 judges in S1303 whether or not the unique identifier linked to the selected identifier in the tracking processing by the tracking unit 204 matches the unique identifier specified in S1302. If it is judged in S1303 that the unique identifiers do not match, the detection unit 206 executes the processing of S806 to judge that the tracking by the tracking unit 204 has failed. If it is judged in S1303 that the unique identifiers match, it means that no tracking failure has occurred for the object position corresponding to the selected identifier, and thus the detection unit 206 executes processing of S1305. In S1305, the detection unit 206 deletes information about the unique identifier specified in S1302 from the list of information about the unique identifiers and object positions obtained through the identification processing by the identification unit 205, so that the unique identifier specified in S1302 is not specified again in the loop processing.

Once the processing from S802 to S1305 is completed for all non-unique identifiers and the loop processing is completed, it means that there is no tracking failure for the object positions corresponding to all non-unique identifiers. Therefore, in this case, the detection unit 206 executes the processing of S805 and judges that the tracking by the tracking unit 204 has not failed. After S805 or S806, the detection unit 206 ends the processing of the flowchart shown in Fig. 13, that is, the processing of S312 shown in Fig. 3.

In a case where the detection unit 206 detects a tracking failure, the complementation unit 208 transmits a reset signal to the tracking unit 204 to complement the tracking data corresponding to the part where the tracking failure has occurred. In a case where the detection unit 206 does not detect any tracking failure, the updating unit 207 performs update processing to update the non-unique identifier to a unique identifier. In the present embodiment, the processing of S1302 is described as specifying the unique identifier linked to the object position closest to the object position linked to the selected identifier, but the method of specifying the unique identifier is not limited thereto. For example, the detection unit 206 may perform the processing of S803, S1304, and S1303 for each of the unique identifiers linked to a predetermined number of object positions in ascending order of distance from the object position linked to the selected identifier.

In the present embodiment, the information processing apparatus 100 is configured to execute the tracking processing and the identification processing independently of each other, to select frames in the identification processing without relying on the identifier obtained by the tracking processing, and to identify the object using the selected frames. The information processing apparatus 100 is also configured to estimate the object position corresponding to each unique identifier in the identification processing without referring to the object position information obtained by the tracking processing.

According to the information processing apparatus 100 thus configured, even if there is omission or overlap of a non-unique identifier in the result obtained by the tracking processing, all objects contained as representation in the frame can be identified without being affected by the result. The information processing apparatus 100 thus enables more accurate object identification, compared to the information processing apparatus 100 according to Embodiment 1.

In the present embodiment, the information processing apparatus 100 is also configured to compare the numbers of unique identifiers and the object positions in the detection processing, in addition to comparing unique identifiers. The information processing apparatus 100 thus configured makes it possible to detect omissions or overlaps regarding the tracking of object positions, which could not be detected by the information processing apparatus 100 according to Embodiment 1. The information processing apparatus 100 thus enables accurate detection of a tracking failure in the tracking processing, compared to the information processing apparatus 100 according to Embodiment 1.

### [Other embodiments]

In the above embodiments, the description is given of an example of using the tracking data generated by the information processing apparatus 100 to generate a virtual viewpoint image, but the use of the tracking data is not limited to only the use for generating a virtual viewpoint image. In the above embodiments, the information processing apparatus 100 and the image processing apparatus 108 are described as different apparatuses, but may be realized as a single apparatus having the functional configuration of the information processing apparatus 100 and the functional configuration of the image processing apparatus 108.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (100) comprising:
an image obtaining unit (201) configured to obtain a plurality of captured images obtained by capturing images of an object from different directions;
a shape estimation unit (202) configured to estimate a three-dimensional shape of the object using the plurality of captured images;
a tracking unit (204) configured to perform tracking processing of the object for tracking the object by estimating an identifier and a position of the object using the three-dimensional shape;
an identification unit (205) configured to perform identification processing of the object for identifying the object using at least some of the plurality of captured images to estimate the identifier and position of the object;
a detection unit (206) configured to perform detection processing of an error in a result of the tracking processing, for detecting an error in the result of the tracking processing based on the result of the tracking processing and the result of the identification processing; and
a complementation unit (208) configured to perform complementation processing of tracking data indicating the result of the tracking processing, for complementing the tracking data using the result of the identification processing, in a case of detection of an error in the tracking processing by the detection unit.

2. The information processing apparatus according to claim 1, wherein
identifiers estimated by the tracking processing represent the same object in a case where he identifiers are the same, and
identifiers estimated by the identification processing represent the same object in a case where he identifiers are the same.

3. ..The information processing apparatus according to claim 1 or 2, wherein
the detection unit detects an error in the result of the tracking processing by comparing at least one of the numbers of identifiers of the object, values of the identifiers of the object, and the positions of the object estimated by the tracking processing and the identification processing to judge whether or not there is an error in the result of the tracking processing.

4. The information processing apparatus according to any one of claims 1 to 3, wherein
the complementation unit resets a state of the tracking processing by the tracking unit in a case where an error is detected in the result of the tracking processing by the detection unit.

5. The information processing apparatus according to any one of claims 1 to 4, wherein
in a case where an error is detected in the result of the tracking processing by the detection unit, the complementation unit complements a portion where the error has occurred in the result of the tracking processing by using an identifier estimated by the identification processing as an initial state.

6. The information processing apparatus according to any one of claims 1 to 5, wherein
the identification unit obtains a region image corresponding to an image region containing representation of the object to be tracked by the tracking processing from at least some of the plurality of captured images, based on the position of the object estimated by the tracking processing, estimates an identifier of the object using the obtained region image, and links the identifier estimated by the identification processing to the identifier estimated by the tracking processing.

7. The information processing apparatus according to any one of claims 1 to 5, wherein
if an image region used to identify the object in each of the plurality of captured images is projected onto a three-dimensional space based on a viewing angle of each of the plurality of captured images, the complementation unit estimates a three-dimensional position of the object corresponding to the identifier, based on a state of projection onto a three-dimensional space of a plurality of the image regions, from which the same identifier is estimated, among projections of the image regions in each of the plurality of captured images.

8. The information processing apparatus according to claim 7, wherein
the detection unit specifies a position of the object that is closest to the position of the object estimated by the tracking processing corresponding to the identifier, among a plurality of positions of the object estimated by the identification processing for the identifier estimated by the tracking processing, and judges whether or not there is an error in the result of the tracking processing, based on a value of the identifier estimated by the tracking processing and a value of the identifier estimated by the identification processing corresponding to the specified position of the object.

9. The information processing apparatus according to claim 8, wherein
the detection unit links an identifier corresponding to the specified position of the object, among the identifiers estimated by the identification processing, to the identifier estimated by the tracking processing.

10. The information processing apparatus according to any one of claims 1 to 9, wherein
the tracking processing by the tracking unit is executed at a predetermined first cycle,
the identification processing by the identification unit is executed at a second cycle longer than the first cycle, and
the detection processing by the detection unit is executed each time the identification processing is executed.

11. The information processing apparatus according to any one of claims 1 to 10, further comprising:
an updating unit configured to update the identifier estimated by the tracking processing, using the identifier estimated by the identification processing, in a case where no error is detected in the tracking processing by the detecting unit.

12. The information processing apparatus according to any one of claims 1 to 11, further comprising:
a viewpoint generation unit configured to generate virtual viewpoint information based on at least one of the result of the tracking processing and the result of the complementation processing by the complementation unit; and
an image generation unit configured to generate a virtual viewpoint image corresponding to appearance from a virtual viewpoint indicated by the virtual viewpoint information, using the plurality of captured images and the three-dimensional shape.

13. An information processing method comprising:
an image obtaining step of obtaining a plurality of captured images obtained by capturing images of an object from different directions;
a shape estimation step of estimating a three-dimensional shape of the object using the plurality of captured images;
a tracking step of performing tracking processing of the object to track the object by estimating an identifier and a position of the object using the three-dimensional shape;
an identification step of performing identification processing of the object to identify the object using at least some of the plurality of captured images to estimate the identifier and position of the object;
a detection step of performing detection processing of an error in a result of the tracking processing to detect an error in the result of the tracking processing based on the result of the tracking processing and the result of the identification processing; and
a complementation step of performing complementation processing of tracking data indicating the result of the tracking processing to complement the tracking data using the result of the identification processing, in a case where an error in the tracking processing is detected in the detection step.

14. A program for causing a computer to function as an information processing apparatus according to any one of claims 1 to 12.
